Europäisches Patentamt

(19) European Patent Office

Office européen des brevets

(11) Publication number: **0 234 189**
B1

# EUROPEAN PATENT SPECIFICATION

(45) Date of publication of the patent specification:
11.04.90

(21) Application number: 87100121.0

(22) Date of filing: 07.01.87

(51) Int. Cl.⁴: **G05D 23/24**, G05D 23/30,
H01H 37/00, H01H 61/02,
H05B 1/02

(54) Electronic household appliance having an electronic program unit with an interface device for controlling highpower components.

(30) Priority: 13.01.86 IT 4570186

(43) Date of publication of application:
02.09.87 Bulletin 87/36

(45) Publication of the grant of the patent:
11.04.90 Bulletin 90/15

(84) Designated Contracting States:
AT BE CH DE ES FR GB IT LI LU NL SE

(56) References cited:
EP-A- 0 052 871
FR-A- 1 387 402
FR-A- 1 561 786
US-A- 2 897 321
US-A- 3 931 560

(73) Proprietor: INDUSTRIE ZANUSSI S.p.A., Via Giardini
Cattaneo 3, I-33170 Pordenone(IT)

(72) Inventor: Milocco, Claudio, Via Piero Gobetti 4,
I-33170 Pordenone(IT)

(74) Representative: Patentanwälte Grünecker, Kinkeldey,
Stockmair & Partner, Maximilianstrasse 58,
D-8000 München 22(DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an electric household appliance such as a dishwasher, a laundry washing machine, a cooking oven or the like of the type having an electronic program unit for controlling the operation of the electric appliance.

As generally known, such electronic program units usually comprise a microprocessor operating at low current value and thus requiring suitable interface devices enabling it to control high-power electrical components of the appliance such as an electric resistance heater. Commonly used interface devices include controlled power curcuit breakers such as TRIAC or SCR, although these components are undesirably expensive and only relatively reliable. It is therefore sometimes preferred to employ electromechanic relays under the control of low-power TRIAC or SCR components, which are much more reliable in operation, but also this solution appears unsatisfactory due to the complicated construction resulting therefrom, to the increased space requirements, and to the possibility of sticking of the electric contacts of the relay.

It is therefore an object of the invention to provide an electric household appliance of the type having an electronic program unit capable of controlling the operation of high-power components through an interface device of simple construction, reliable operation and low cost.

According to the invention this object is attained by an electric household appliance having an electronic program unit for controlling at least one electric high-power component through an interface device comprising at least one controlled low-power circuit breaker controlled by an output of the program unit, at least one electric circuit breaker connected in the energizing circuit of the respective high-power component and at least one thermistor in heat-exchange relationship to at least one bi-metallic element cooperating with said electric circuit breaker for switching it between a first and a second operative position, said thermistor being arranged in series with said controlled circuit breaker and said high-power component being arranged in series with said electric circuit breaker, both series arrangements being connected across the terminals of said energizing circuit.

The interface device is of a particularly simple construction and is preferably integrated in other devices, for instance, safety devices, provided in the electric household appliance according to the invention.

The characteristics and advantages of the invention will become evident from the following description, given by way of example with reference to the accompanying drawings, wherein:

fig. 1 shows a diagrammatic view of the principal components of an electrical household appliance for controlling a power circuit by means of an electronic program unit through an interface device according to an embodiment of the invention,

fig. 2 shows a sectional view of a preferred embodiment of one of the components shown in fig. 1, and,

figs. 3 and 4 show a modification of the component of fig. 2 in two different operative positions.

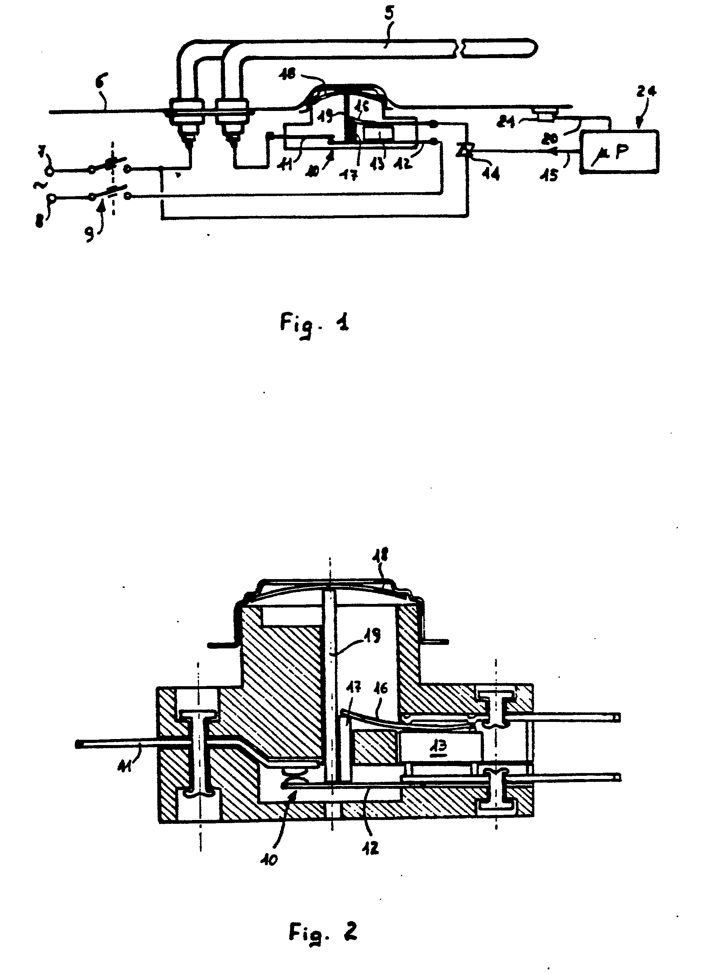

With reference to fig. 1, the electric household appliance according to the invention comprises an electronic program unit generally indicated at 24 and operable to control the operation of the various low-power and high-power electric components of the appliance.

For simplicity's sake, fig. 1 depicts only one of the high-power components of the appliance, in this case an electric resistance heater 5 of a washing machine. Heater 5 is secured to a wall 6 of the washing tub of the machine and adapted to be connected to the terminals 7,8 of an electric power supply through a main power switch 9 and an electric circuit breaker 10 connected in series therewith comprising a fixed contact 11 and a normally closed movable contact 12.

As also shown in fig. 2, movable contact 12 of circuit breaker 10 is connected to one terminal of a thermistor 13, preferably of the positive temperature coefficient type (PCT), the other terminal of which is connected to terminal 7 through a controlled low-power circuit breaker 14. Circuit breaker 14 may for instance be a TRIAC of the type TLC 381 S adapted to a maximum current value of about 1 A. The control electrode of circuit breaker 14 is connected to a control output terminal 15 or program unit 24 for the supply of low-current control signals.

Thermistor 13 and TRIAC 14 are thus connected in series between terminals 7 and 8 in parallel to the series-connnected resistance heater 5 and circuit breaker 10, and through main power switch 9.

Thermistor 13 is mounted in heat-transmitting contact with a bi-metallic element 16 mechanically coupled to movable contact 12 of circuit breaker 10 through an actuating plunger 17 of an insulating material. In particular, bi-metallic element 16 is adapted to be deformed on attaining a predetermined temperature so as to switch circuit breaker 10 from its normally closed state to its open state.

With the aim of a reduction of the number of components and their integration, circuit breaker 10 preferably forms part of another per se known component already provided in the electric household appliance.

As shown for instance in figs 1 and 2, circuit breaker 10 may be part of a thermostatic overheat protection device comprising a further bi-metallic element 18 mounted in heat-transmitting contact with tub wall 6 in proximity to resistance heater 5. In the same manner as bi-metallic element 6, bi-metallic element 18 is mechanically coupled to movable contact 12 of circuit breaker 10 by means of an actuating plunger 19 of an insulating material extending substantially parallel to plunger 17. Bi-metallic element 18 is likewise adapted to be deformed as the predetermined safety temperature is attained for switching curcuit breaker 10 from its normally closed state to the open state.

Finally, a control input terminal 20 of electronic program unit 24 is connected in a per se known manner to a sensor 21 adapted to detect the internal temperature of tub 6.

Operation of the appliance is started by closing main power switch 9 for energizing resistance heater 5. At the same time program unit 24 produces a signal at output terminal 15 for rendering TRIAC 14 conductive, whereby thermistor 13, which is originally cold and has therefore a low resistance value, is rapidly heated by the current flowing therethrough, and transmits the thus generated heat to bi-metallic element 16. This results in element 16 being deformed in a short time of about 3 seconds, so as to open circuit breaker 10 by means of plunger 17. As a result, the electric power supply to heater 5, thermistor 13 and TRIAC 14 is interrupted after a negligibly short period of time during which heater 5 had been energized, while the resistance of thermistor 13 rises with its temperature, until it acts as an open switch. Susequently, resistance heater 5 is in the state of being energized for heating the liquid contained in tub 6 after bi-metallic element 16 and thermistor 13 have cooled down. The cooling-down of the these two elements 13 and 16, and the resultant re-deformation of bi-metallic element 16 requires a relatively long time in the order of several tens of seconds, whereby the operation of the appliance is not, however, unduly influenced.

When program unit 24 by the action of sensor 21 determines that the predetermined internal temperature of tub 6 has been attained, it generates in a per se known manner a control signal at output terminal 15 for rendering TRIAC 14 conductive. As described above, the resultant rapid heating of thermistor 13 and thus bi-metallic element 16 causes circuit breaker 10 to be opened for de-energizing resistance heater 5.

In the case that overheating occurs within tub 6 or in the vicintiy of thermistor 13, bi-metallic element 18, which is suitably calibrated to be deformed at a higher temperature than bimetallic element 16, is deformed so as to open circuit breaker 10 by the action of plunger 19 for de-energizing heater 5.

In this context it is to be noted that the mechanical forces exerted by bi-metallic elements 16 and 18 through the respective plungers 17 and 19 on circuit breaker 10 are sufficient to overcome the tendency of electric contacts 11, 12 of the circuit breaker to "stick".

The above description clearly shows the operational reliability of the electric household appliance according to the invention, which is provided with an interface device for the control of power-operated components, including elements 10 to 14 and 16, 17. These elements are readily assembled, require little space, are inexpensive and are readily integrated in a unitary structure as shown in fig. 2. It is also to be noted that the only electronic component of the interface device is a controlled low-power circuit breaker 14 which is known to be highly reliable.

The electric household appliance under consideration may, of course, be of any type other than the one described, and may undergo various modifications within the scope of the invention.

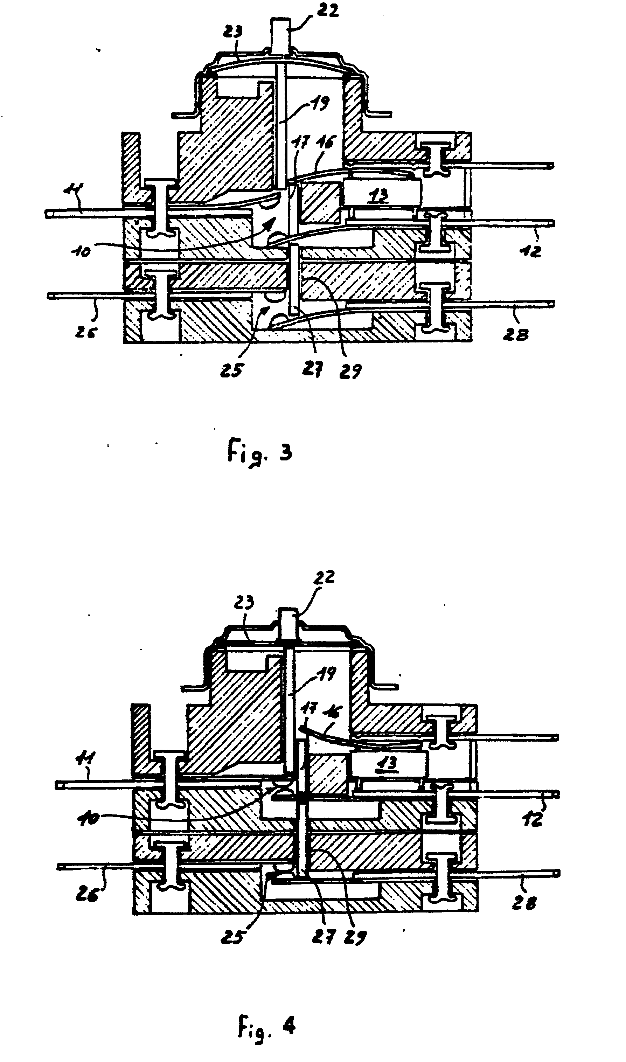

The electronic program unit 24 may thus be designed to generate the control signal at its output terminal 15 at any other time, and the interface device may be designed in the manner shown in figs 3 and 4, wherein identical components are designated by the same reference numerals as above.

According to this modification, contact 11 of electric circuit breaker 10 is resiliently deformed to the open state as shown in fig. 3, but is normally retained in the closed state of circuit breaker 10 by the action of actuating plunger 19 (fig. 4). Plunger 19 cooperates with a per se known safety button 22 itself biased by a resilient element 23 towards a projecting position (fig. 3). Likewise in a per se known manner, safety button 22 is adapted to cooperate with a loading door of the electric appliance. In particular, when the door is closed, safety button 22 is depressed as shown in fig. 4, while with the door open, resilient member 23 maintains safety button 22 in its projecting position shown in fig. 3. As a result, circuit breaker 10 is opened not only when thermistor 13 and bi-metallic element 16 (acting on contact 12) are heated, but also when the door of the electric appliance is opened. That is because, in this case, contact 11 is permitted to assume the resiliently deformed configuration shown in fig. 3 for opening the circuit breaker even when thermistor 13 and bi-metallic element 16 are below the predetermined operating temperature.

As also shown in figs. 3 and 4, the main components of the interface device can also be fully integrated in an electric appliance having additional electric circuit breakers similar to the one indicated at 10.

A suitable support structure may thus carry an additional circuit breaker 25 having contacts 26 and 28 and mounted parallel to circuit breaker 10 thereabove or below. In this case, a further insulating actuating plunger 27 is freely slidable in a guide bore 29 for transmitting the movements of bi-metallic element 16 to normally closed contact 28 via actuating plunger 17 and movable contact 12.

Circuit breaker 25 thus operates simultaneously with circuit breaker 10 and may suitably be employed for controlling the energization of another high-power component of the electric appliance or for interrupting the connection to the other terminal of electric resistance heater 5.

## Claims

1. An electric household appliance having an electronic program unit for controlling at least one electric high-power component through an interface device including at least one controlled low-power circuit breaker controlled by said program unit, at least one electric circuit breaker connected in the energizing circuit of said high-power component, and at least one thermistor (13) disposed in heat exchange relationship to at least one bi-metallic element (16) cooperating with said electric circuit breaker (10) for switching it between a first and a second operative position, characterized in that said thermistor (13) is arranged in series with said controlled circuit breaker (14) and said high-power component (5) is arranged in series with said electric circuit breaker (10), both series arrangements being connected across the terminals (7,8) of said energizing circuit.

2. An electric household appliance according to claim 1, in which said high-power component comprises a resistance heater for heating a treatment chamber, characterized in that a further bi-metallic element (18) is disposed in heat exchange relationship to said chamber (6) and adapted to cooperate with said electric circuit breaker (10) for switching it between said first and second operative positions.

3. An electric household appliance according to claim 1, in which said electric circuit breaker is of the normally closed type in its first operative position and includes a first and a second electric contact, characterized in that said first electric contact (12) cooperates with said bi-metallic element (16), while actuator means (22,23,19) associated to a loading door of the appliance cooperate with said second electric contact (11) for permitting it to assume a position opening said electric circuit breaker (10) when said door is in the open position.

## Revendications

1. Appareil ménager électrique ayant un programmateur électronique pour commander au moins un composant de puissance électrique par l'intermédiaire d'une interface comportant au moins un coupe-circuit de faible puissance commandé par le programmateur, au moins un coupe-circuit électrique raccordé au circuit d'excitation de ce composant de puissance, et au moins un thermistor (13) disposé en relation d'échange thermique avec au moins un bilame 16 coopérant avec le coupe-circuit électrique (10) pour le commuter entre une première position active et une deuxième position active, caractérisé en ce que ce thermistor (13) est monté en série avec le coupe-circuit commandé (14) et que le composant de puissance (5) est monté en série avec le coupe-circuit électrique (10), ces deux montages en série étant raccordés aux bornes (7, 8) du circuit d'excitation.

2. Appareil ménager électrique selon la revendication 1, dans lequel le composant de puissance est une résistance chauffante pour chauffer une chambre de traitement, caractérisé en ce qu'un autre bilame (18) est disposé en relation d'échange thermique avec la chambre (6) et est adapté pour coopérer avec le coupe-circuit électrique (10) pour le commuter entre la première position active et la deuxième position active.

3. Appareil ménager électrique selon la revendication 1, dans lequel le coupe-circuit électrique est du type normalement fermé dans sa première position active et comporte un premier contact électrique et un deuxième contact électrique, caractérisé en ce que le premier contact électrique (12) coopère avec le bilame (16), tandis que des moyens d'actionnement (22, 23, 19) associés à une porte de chargement de l'appareil, coopèrent avec le deuxième contact électrique (11) pour permettre à ce dernier de prendre une position ouvrant le coupe-circuit électrique (10) lorsque cette porte est dans la position ouverte.

## Patentansprüche

1. Elektrisches Haushaltsgerät mit einer elektronischen Programmeinheit zum Steuern wenigstens eines elektrischen Hochleistungsbauelements über eine Schnittstellenvorrichtung, die wenigstens einen gesteuerten Schwachlastunterbrecherschalter enthält, der durch die Programmeinheit gesteuert wird, wobei wenigstens ein elektrischer Unterbrecherschalter in den Stromversorgungskreis des Hochleistungsbauelements geschaltet ist, und mit wenigstens einem Thermistor (13), der in Wärmetauschbeziehung zu wenigstens einem Bimetallelement (16) angeordnet ist und mit dem elektrischen Unterbrecherschalter (10) zusammenwirkt, um ihn zwischen einer ersten und einer zweiten Betriebsstellung umzuschalten, dadurch gekennzeichnet, daß der Thermistor (13) in Serie zu dem gesteuerten Unterbrecherschalter (14) geschaltet ist und das Hochleistungsbauelement (5) in Serie zu dem elektrischen Unterbrecherschalter (10) geschaltet ist, wobei beide Serienanordnungen über die Anschlüsse (7, 8) des Stromversorgungskreises geschaltet sind.

2. Elektrisches Haushaltsgerät nach Anspruch 1, bei dem das Hochleistungsbauelement ein Widerstandsheizer zum Heizen einer Behandlungskammer ist, dadurch gekennzeichnet, daß ein weiteres Bimetallelement (18) in Wärmetauschbeziehung zu der genannten Kammer (6) angeordnet und dazu eingerichtet ist, mit dem elektrischen Unterbrecherschalter (10) zusammenzuwirken, um ihn zwischen den ersten und zweiten Betriebsstellungen umzuschalten.

3. Elektrisches Haushaltsgerät nach Anspruch 1, bei dem der elektrische Unterbrecherschalter vom normalerweise geschlossenen Typ in seiner ersten Betriebsstellung ist und einen ersten und einen zweiten elektrischen Kontakt aufweist, dadurch gekennzeichnet, daß der erste elektrische Kontakt (12) mit dem Bimetallelement (16) zusammenwirkt, während Betätigungseinrichtungen (22, 23, 19), die einer Beschickungstür des Gerätes zugeordnet sind, mit dem zweiten elektrischen Kontakt (11) zusammenwirken, um es ihm zu ermöglichen, eine Stellung einzunehmen, in der der elektrische Unterbrecherschalter (10) geöffnet wird, wenn die Tür sich in der geöffneten Stellung befindet.

Fig. 1

Fig. 2

Fig. 3

Fig. 4